Europäisches Patentamt

(19) European Patent Office

Office européen des brevets

(11) Publication number : **0 453 414 A1**

(12) **EUROPEAN PATENT APPLICATION**

(21) Application number : 91830131.8

(22) Date of filing : 08.04.91

(51) Int. Cl.⁵ : **A01K 1/01, B01J 20/12, C02F 1/68**

(30) Priority : 17.04.90 IT 936890

(43) Date of publication of application :
23.10.91 Bulletin 91/43

(84) Designated Contracting States :
AT BE CH DE DK ES FR GB GR LI LU NL SE

(71) Applicant : LAVIOSA CHIMICA MINERARIA S.P.A.
Scali D'Azeglio 6
I-57123 Livorno (IT)

(72) Inventor : Biasci, Andrea
Via Castelli della Vinca
Livorno (IT)
Inventor : Rinaldi, Athos
175, Borgo San Jacopo
Livorno (IT)

(74) Representative : Bardini, Marco Luigi et al
c/o Società Italiana Brevetti, Corso dei Tintori, 25
I-50122 Firenze (IT)

(54) **Granular material, in particular of clayey nature, for the adsorption of oily and biological liquids and relative method of production.**

(57) Absorbent granular material in particular of clayey nature with a partial superficial coating which eliminates powderiness conserving absorbent properties with respect to water and oily and biological substances. Extending the coating to the entire surface of the granules a hydrophobic material can be obtained with good absorbent properties in regard to oily liquids. The coating material is chosen among organic substances having softening points no higher than 60°C such as paraffin, vaseline, petrolatums, mineral oils and similar substances, and their mixtures.

EP 0 453 414 A1

This invention relates to a nonpowdery granular material in particular of clayey nature suitable for the absorption of oily and biological liquids.

The invention also relates to a method for the production of this material.

The absorbent properties of some materials of clayey nature with regard to water, biological and oily liquids and odors are well known. In quantitative terms, those properties, relative to some of these materials, are shown on the table below.

| | BENTONITE | SEPIOLITE | POLYGORSKITE |
|---|---|---|---|
| Humidity % | 9-13 | 9-12 | 9-12 |
| Bulk density, Kg/1 | 0,4-0,9%* | 0,4-0,6 | 0,4-0,6 |
| Water absorption % (West.metd.) | 70-120 | 70-90 | 70-90 |
| Oil absorption % (West.metd.) | 30-60 | 40-50 | 40-50 |
| Attrition % | 7 | 10/15 | 10/15 |
| Odor absorption | +++ | + | + |
| Granulometry, mm | 0,5-5,5 | 0,5-5,5 | 0,5-5,5 |
| Structure | lamellar | fibrous | fibrous |

* according to the content in amorphous silica.

In consideration of these absorbent properties with respect to various types of liquids often malodorous and oleiferous, these and other materials of clayey nature are used for the purposes of reducing environmental pollution and hygienic cleaning of various types. They are used for instance for:
– recovery and disposal from the work environment of oleiferous muds resulting from the lubrication of implemental machines;
– recovery of oily muds from distillation residues petroliferous substances;
– absorption of odors, excrements and biological wastes in general, for example due to the presence of animals, in particular cats, in the domestic environment;
– recovery of large quantities of oily substances accidentally spilled from large tanks or from transport vehicles with serious risks of environmental pollution.

Other clayey materials sometimes used as absorbents are kaolinite, illite and similar, while among the non clayey inorganic materials we cite calcium sulfate (used in a granular form to support pesticides), calcium silicate, amorphous silica and similar.

Clayey absorbent materials present the inconvenience that, when the pollutant is of oily nature in a water medium, their absorbent capacity functions with both the water and the pollutant with consequently lower efficiency of absorption. There are also materials of clayey nature which absorb organic liquids, for example materials with a basis of pearlite, vermiculite or special clays which, upon treatment at high temperatures, expand forming a vast specific surface. Those materials present however an apparent specific weight so low (0,1-0,2 Kg/l) that it is very difficult to spread them on open-air surfaces and in particular on the constantly windy sea surface.

Another inconvenient of absorbent granular materials of clayey nature is their highly powdery quality, a characteristic which is very undesirable especially when the flakes are used for the absorption of animal odors and dejections, such as litter, especially for cats, because in this case the dust developed by the flakes disperses bothersomely in the domestic environment.

The object of this invention is to provide an absorbent granular material in particular of clayey nature, that is partially or completely impermeable to water, conserving its primitive permeability to biological or, respectively, oily substances, and that proves to be in any case nonpowdery.

Another object of the invention is to provide a method for the preparation of said material, suitable for application in large scale industrial production.

The granular absorbent material described in this invention allows the above-mentioned objects to be reached.

The material according to the invention is formed by granules of absorbent inorganic substances coated with an organic substance having a softening point no higher than 60°C.

Preferably the absorbent substance is of clayey nature, in the form of granules, chosen from smectite, in particular bentonite, polygorskite, sepiolite and their mixtures. Other materials of clayey nature can also be used such as kaolinite, illite, and other similar also in mixtures among themselves and with the above-mentioned, and inorganic materials of non clayey nature such as calcium silicate, calcium sulphate, amorphous silica also in a mixture with the aforesaid clayey materials.

Organic coating substances, suitable for this application and which presents the said characteristic are:
- paraffinic substances and paraffin oils, that are mixtures of paraffinic and nonparaffinic mineral oils, with paraffin at the higher melting point;
- vaseline and vaseline oils;
- petrolatums (distillation fractions of the oil containing aliphatic hydrocarbons, from which the pure paraffins, vaseline and mineral oils are extracted, all being saturated materials of fatty nature);
- silicones;
- stearins and metallic stearates;
- waxes;
- mineral oils;
- fats and salts of fatty acids;
- tung oils with a basis of linseed oil;
- synthetic and natural adhesives with a basis of polyester, polyamides, polyurethanes and, respectively, a basis of proteinaceous glue or coming from starchy substances and dextrins;
- other synthetic polymers such as polyethylene glycol, polyvinyl alcohols, polyvinyl acetates, polyethylenes and similar.

In particular mixture of the above listed substances can be used.

The physical-technological characteristics of the organic substances preferred for application in partial or total coating of the flakes according to this invention are shown below:

|  | SILICONE | PARAFFIN | VASELINE | PETROLATUM |
|---|---|---|---|---|
| Specific weight, Kg/l | 0,97 | -- | 0.825÷0.85 | 0.8 at 15°C |
| Viscosity,CSK | 350 | 15.5 at 100°C | -- | -- |
| Flash point, °C | 300-330 | 280 | 200 | -- |
| Melting point | -- | 81 | 35÷48 | -- |
| Refraction index | -- | -- | 1.464 at 40°C | -- |
| Flame point COC,°C | -- | -- | -- | 254 |
| Softening range °C SSU | -- | -- | -- | 45-60 |
| Penetration (mm) at 25°C. | -- | -- | -- | 35-40 |

To pass from partial permeability to aqueous liquids to complete impermeability of the flakes to water, it is sufficient to increase correspondingly the quantity of the coating material used up to a maximum of 20% of the weight of the material to be coated according to the bulk density of that material and of the coating material used. However, with just a partial coating of the granules, which are therefore still permeable to both water and organic substances, we obtain the complete elimination of dust.

The fundamental prerequisites of the coating materials cited above are that they must be solid or almost solid at room temperature and have softening points around 40-50°C and in any case not higher than 60°C, such as to form a surface film, fit for partially or totally coating the surface of the granules without however penetrating deeply, in such a way not to lose completely the absorbent properties. The use of organic substances similar to those indicated above, but liquid at room temperature, would be inadequate, in that they would be absorbed by the entire mass of the granule, and not only superficially, which would lose therefore all capacity for further absorption. Likewise the use of organic coating substances with higher softening points would not give industrially acceptable results. In fact, as a result of the large difference between the temperature at which the substance would remain liquid and room temperature, the substance itself would tend to solidify with the formation of many small particles of the coating substance, similar to small drops, which settle on the granules. In this way the quantity of substance necessary increases considerably for both the removal of dust from the granules and their waterproofing. In order to remedy this the coating should be carried out at a temperature higher than room temperature increasing the operating costs by an unacceptable amount.

The procedure for the production of the dust-free granular absorbent material according to this invention provides for the bringing into contact of the granules of the material to be coated with the organic coating substance, previously heated to a temperature equal or slightly higher than that of softening. The contact between the fluid organic substance and the granules can be realized in either continuous or discontinuous manner. In the first case, the granular material is supplied on a conveyor belt in continuous motion such as to form a layer of about 1 cm and the coating substance is sprayed onto it. In the second case, the use of a mixer with horizontal blades rotating at a low velocity is preferable. The continuous process is suitable for obtaining a partial coating of the granules effective in the elimination of dust. The discontinuous process is preferred on the other hand when total coating of the granules is requested in order to render them even more impermeable to water.

In practice the organic coating substance is melted, if necessary, or just heated and sprayed, for example in the form of a mist , on the granules of the material to be coated in a quantity suitable for obtaining their partial or total coating.

In the first case, the coating material used varies between 1 and 10% of the weight of the material to be coated and preferably between 2,5 and 5%; in the second case (creation of complete permeability) the quantity of the coating material varies between 5 and 20% of the weight of the material to be coated and preferably between 10 and 15%. The optimum percentages vary obviously, within the limits set forth above, in relation to the material used and in particular to its bulk density. While for example 5 Kg of coating substance on 100 Kg of material at a high bulk density (such as a bentonite free of amorphous silica with specific weight 0,8/0,9 Kg/l) can be sufficient to create complete impermeability, the same quantity of coating substance covers only partially the granules of a sepiolite with a bulk weight of 0,4/0,45 Kg/l achieving only its dust-free quality. This is obviously the result of a wider specific surface, at the same weight, of the materials of lower bulk density.

The following examples are given for the purpose of illustrating some practical uses for this invention.

## Example 1

100 Kg of granular bentonite with granules size comprised between 0,5 and 5,5 mm, the characteristics of which are shown on page 2, are sprayed on a conveyor belt in movement with a velocity of 0,5-1 m/sec with 3,0 Kg of a hot suspension at 50°C of a mixture of 2/3 vaseline to 1/3 paraffin. The thickness of the material on the conveyor belt is maintained at about 1 cm, while the hot oily material must be in the form of a mist and directed in such a way that it falls only on the strip of material in movement. After the treatment the material is partially coated, but has lost all dust as it can be easily revealed by checking the behavior at pouring of the two samples of treated and untreated material. The other characteristics of the treated material and untreated material are compared in the following table:

|  | GRANULAR BENTONITE | GRANULAR DUST-FREE BENTONITE |
|---|---|---|
| Humidity % | 12 | 12 |
| Bulk density Kg/l | 0,85 | 0,85 |

| Water absorption % (West.metd.) | 118 | 120 |
|---|---|---|
| Oil absorption % (West.metd.) | 60 | 55 |
| Attrition % | 7 | 6,8 |
| Odor absorption | +++ | ++ |
| Granulometry in mm | 0,5-5,5 | 0,5-5,5 |
| Structure | lamellar | lamellar |

As can be seen, there is a certain decrease in the absorption power with respect to odors and in the absorption of oil (10% less), where as for water, the granule being partially covered and impermeable, the absorption is complete, even if slower. However, this last datum is not important since it is caused by the long period of contact (30') provided for by the method of analysis (the Westinghouse method).

**Example 2**

100 Kg of sepiolite granules with a bulk density of 0,50 Kg/l were treated with 4 Kg of a mixture composed of two parts vaseline to one part paraffin. The mixture was sprayed hot (50-60°C) onto the flakes kept in motion inside an appropriate container equipped with slowly rotating arms. The flakes became partially coated and still showed good absorbent properties with respect to water, oil, organic liquid, etc. and did not cause the emission of dust, for example, during the operation of pouring from one container to another.

**Example 3**

100 Kg of a granular material with a base of bentonite containing 30-40% amorphous silica ( specific weight 0,60) were treated with 3 Kg of the mixture in the previous example and in the same operative conditions. Also in this case a granular material was obtained which preserves good absorbent properties and does not cause the emission of dust in its handling.

**Example 4**

100 kg of sepiolite in granules with bulk density of 0,50 Kg/l were treated with a mixture of 90/10 of paraffin (melting point 80°C) and silicone oil. Said mixture was sprayed hot (at a temperature of 50-60°C) on the flakes. 5 Kg of said mixture were used. The flakes thus obtained were selectively permeable to oils and completely impermeable to water.

**Example 5**

100 Kg of granular material with a basis of bentonite and containing 30-40% amorphous silica with bulk density of 0,6 Kg/l (as in example 2) were treated with 5 Kg of a mixture 90/10 of paraffin and silicone oil (as in example 3). The temperature of the treatment was 60°C. The granular product obtained was completely water-repellent, suitable for floating on water.

**Example 6**

1000 Kg of granular polygorskite with granule size comprised between 0,5 and 5,5 mm and bulk density of 0,55 Kg/l were treated with 50 Kg of a mixture of petrolatum heated to 50°C which was made into a mist and sprayed on the granular material contained in a mixer with horizontal blades having a low velocity such as to not break the granules. In this way we obtained flakes which do not produce dust and conserve absorbent properties with respect to both water and oil and biological liquids.

Increasing the quantity of petrolatum to 100 Kg, a complete impermeability is obtained, whereby the flakes obtained, other than not producing dust during handling, can be utilized, to absorb selectively oily substances such as crude oils.

The granular materials according to this invention, after their treatment for impermeability have a bulk density varying between 0,40 and 0,70 Kg/l and, therefore, float on the surface of water absorbing exclusively the oily substances present in it. The oil saturated granules can then be gathered from the polluted surface by means of special collection equipment of a known type.

Variations and/or modifications can be brought to the granular material for the absorption of oily and organic liquids according to this invention without departing from the scope of the invention itself.

## Claims

1. Granular material for the absorption of oily and organic liquids made from granules of an inorganic absorbent material, characterized by the fact that said granules are coated with an organic substance having a softening point lower than 60°C chosen from among paraffin, paraffin oil, vaseline, vaseline oil, silicone, waxes, stearin and metallic stearates, mineral oils, fats, salts of fatty acids, natural and synthetic high polymers, and mixtures of those products.

2. Granular absorbent material according to claim 1, in which said inorganic absorbent material is chosen from among materials of clayey nature such as smectite, sepiolite, polygorskite, illite, kaolinite and of non clayey nature such as calcium silicate, calcium sulphate and their mixtures.

3. Granular absorbent material according to claim 1, in which said inorganic absorbent material is of clayey nature and is chosen from among smectite, sepiolite, polygorskite and their mixtures.

4. Granular material according to claim 1, in which said organic coating substance is comprised between 1 and 20% of the weight of the material to be coated.

5. Granular material according to the previous claims in which said organic coating substance is comprised between 1 and 10%, such that the flakes are partially coated and preserve good permeability to water and to biological liquids and are completely dust-free.

6. Granular material according to claim 5, in which the quantity of said organic coating substance is comprised between 2,5 and 5% of the weight of the material to be coated.

7. Granular material according to claim 4, in which the organic coating substance is comprised between 5 and 20%, the flakes being completely coated and selectively permeable to oily liquids and impermeable and completely dust-free.

8. Granular material according to claim 7, in which the content of the organic coating substance is comprised between 10 and 15%, of the weight of the material to be coated.

9. A process for the production of an inorganic granular material with absorbent properties and without powderiness, characterized by the fact that a granular material is brought into contact with an organic substance, previously heated to a temperature higher than its softening point, said organic substance having been chosen among paraffin, paraffin oil, vaseline, vaseline oil, silicone, waxes, stearin and metallic stearates, mineral oils, fats, salts of fatty acids, high natural and synthetic polymers, and mixtures of these products, the softening point of said substance being no higher than 60°C.

10. The process according to claim 9, in which a continuous layer of such granular material is created and sprayed with said previously heated organic coating substance.

11. The process according to claim 9, in which said granular material is loaded into a mixture with slowly rotating arms in which said organic coating substance previously heated is sprayed.

12. The process according to claim 9 to 11, in which said inorganic absorbent material is chosen among materials of clayey nature, such as smectite, sepiolite, polygorskite, illite, kaolinite, and of non clayey nature such as calcium silicate, calcium sulphate, amorphous silica and their mixtures.

13. The process according to claim 6 to 11, in which said inorganic absorbent material is of clayey nature and is chosen among smectite, sepiolite, polygorskite and their mixtures.

14. The process according to claim 9 to 13, in which said organic coating substance is used in a percentage comprised between 1 and 20% with respect to the weight of the material to be coated.

15. The process according to claim 14, in which said organic substance is used in a percentage comprised between 1 and 10% with respect to the material to be coated.

16. The process according to claim 15, in which said organic coating substance is used in a percentage comprised between 2,5 and 10% with respect to the weight of the material to be coated.

17. The process according to claim 14, in which said organic coating substance is used in a percentage comprised between 5 and 20% with respect to the weight of the material to be coated.

18. The process according to claim 17, in which said organic coating substance is comprised between 10 and 15% with respect to the weight of the material to be coated.

EP 0 453 414 A1

### European Patent Office

## EUROPEAN SEARCH REPORT

Application Number

EP 91 83 0131

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 471 717 (H.L. LANDER) <br> * Column 1, line 66 - column 2, line 46 * | 1,9 | A 01 K 1/01 <br> B 01 J 20/12 <br> C 02 F 1/68 |
| X | US-A-4 444 148 (H.L. LANDER) <br> * Column 3, line 53 - column 4, line 21; column 4, example 3 * | 1,2,9,12 | |
| A | FR-A-2 446 671 (EFFEM GmbH) | | |
| A | DE-B-1 195 220 (DEUTSZHE PERLITE) | | |

TECHNICAL FIELDS
SEARCHED (Int. Cl.5)

A 01 K
B 01 J
C 02 F

The present search report has been drawn up for all claims

| Place of search | Date of completion of the search | Examiner |
|---|---|---|
| THE HAGUE | 04-07-1991 | PYFFEROEN K. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

8